(19) Europäisches Patentamt
European Patent Office
Office européen des brevets

(11) Veröffentlichungsnummer: **0 017 768**
**B1**

(12) # EUROPÄISCHE PATENTSCHRIFT

(45) Veröffentlichungstag der Patentschrift: **25.11.81**

(51) Int. Cl.$^3$: **C 09 B 62/006,** C 09 B 29/36, D 06 P 3/66

(21) Anmeldenummer: **80101372.3**

(22) Anmeldetag: **17.03.80**

(54) **Reaktivfarbstoffe und ihre Verwendung.**

(30) Priorität: **20.03.79 DE 2910861**

(43) Veröffentlichungstag der Anmeldung: **29.10.80 Patentblatt 80/22**

(45) Bekanntmachung des Hinweises auf die Patenterteilung: **25.11.81 Patentblatt 81/47**

(84) Benannte Vertragsstaaten: **CH DE FR GB IT**

(56) Entgegenhaltungen:
**DE-A-2 223 871**
**DE-A1-2 623 839**
**DE-A1-2 702 371**
**DE-A1-2 721 955**
**DE-A1-2 734 927**
**DE-A1-2 804 599**

(73) Patentinhaber: **BASF Aktiengesellschaft, Carl-Bosch-Strasse 38, D-6700 Ludwigshafen (DE)**

(72) Erfinder: **Kurtz, Walter, Dr., Sonnenwendstrasse 73, D-6702 Bad Duerkheim 1 (DE)**
Erfinder: **Krueger, Heinz, Dr., Kalmitstrasse 15, D-6833 Waghaeusel (DE)**
Erfinder: **Schaffer, Ortwin, Dr., Bruesseler Ring 43, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 017 768 B1

BUNDESDRUCKEREI BERLIN

## Reaktivfarbstoffe und ihre Verwendung

Die Erfindung betrifft Verbindungen der allgemeinen Formel I

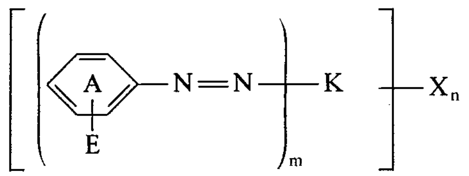

in der

E einen Rest der Formel

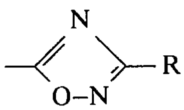

oder

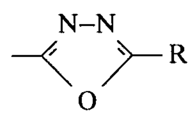

K der Rest einer Kupplungskomponente,
R Wasserstoff oder ein Substituent,
X eine reaktive Gruppe,
m die Zahlen 1 oder 2 und
n die Zahlen 1, 2, 3 oder 4 bedeuten und wobei der Ring A noch weiter substituiert sein kann.

Die Reste der Kupplungskomponenten entstammen z. B. der Anilin-, Naphthalin-, Pyrazol-, Pyridin-, Acetoacetarylid-, Pyrimidin- oder Indolreihe, wobei diese Bezeichnungen nur den Grundkörper der Verbindungsklasse angeben; die Pyrazolreihe umfaßt demnach z. B. auch die Pyrazolonverbindungen und die Naphthalinreihe z. B. die Naphthole, Aminonaphthaline, Aminonaphthole, Naphtholsulfonsäuren, Aminonaphthalinsulfonsäuren und Aminonaphtholsulfonsäuren.

Einzelne Kupplungskomponenten sind beispielsweise:
Anilin-N-ω-methansulfonat, o- und m-Toluidin, o- und m-Anisidin, Anthranilsäure-N-ω-methansulfonat, Kresidin, 2,5-Dimethylanilin, 2,5-Dimethoxyanilin, m-Aminoacetanilid, 3-Amino-4-methoxyacetanilid, 3-Amino-4-methylacetanilid, 3-Amino-4-chloracetanilid, m-Aminophenylharnstoff, N-Methylanilin, N-Methyl-m-toluidin, N-Äthylanilin, N-Äthyl-m-toluidin, N-β-Hydroxyäthylanilin, N-β-Hydroxyäthyl-m-toluidin.

2,6-Dihydroxypyridin, 2,6-Dihydroxy-3-cyan- und 2,6-Dihydroxy-3-cyan-4-methylpyridin, 1-Methyl-3-cyan-6-hydroxypyrid-2-on und 1-Methyl-3-cyan-4-methyl-6-hydroxypyrid-2-on, die entsprechenden in 1-Stellung durch Äthyl, Propyl, Butyl, Amyl, Hexyl, Octyl, Isooctyl, β-Hydroxyäthyl, β-Hydroxypropyl, β-Methoxy-(-Äthoxy-, Propoxy- oder -Butoxy-) äthyl oder -propyl, Cyclohexyl, Benzyl, Phenyläthyl, Phenyl, Methylphenyl, Chlorphenyl oder Methoxyphenyl substituierten Pyridone, weiterhin die entsprechenden Pyridone, die anstelle der Cyangruppe in 3-Stellung die Carbamoylgruppe tragen sowie die in der DE-OS 2 260 827 beschriebenen Pyridinverbindungen. Als Pyrimidinkupplungskomponenten sind z. B. die in den DE-OS 2 202 820 und 2 308 663 aufgeführten Verbindungen geeignet. Weiterhin sind Barbitursäure und deren N-Substitutionsprodukte zu nennen. Als N-Substituenten sind dabei insbesondere $C_1$- bis $C_4$-Alkyl und gegebenenfalls substituiertes Phenyl anzuführen.

Als Pyrazol-Kupplungskomponenten seien beispielsweise genannt:
1-Methyl-, 1-Äthyl-, 1-Propyl-, 1-Butyl-, 1-Cyclohexyl-, 1-Benzyl- oder 1-Phenyl-5-aminopyrazol, 1-(4′-Chlorphenyl)-5-aminopyrazol, 1-(4′-Nitrophenyl)-5-aminopyrazol, 1-(4′-Methylphenyl)-5-aminopyrazol, 1-Phenyl-3-methyl-5-aminopyrazol.

Weiterhin Pyrazolone wie
1-(2′-Äthylphenyl)-3-methyl-5-pyrazolon, 1-(2′-Methyl-6′-chlorphenyl)-3-methyl-5-pyrazolon, 1-(3′-Aminophenyl)-3-carboxy-5-pyrazolon, 1-(5′,7′-Disulfonaphthyl-2′)-3-methyl-5-pyrazolon, 1-(3′-Aminophenyl)-3-methyl-5-pyrazolon, 1-(4′-Aminophenyl)-3-methyl-5-pyrazolon, 1-Phenyl-3-carbäthoxy-5-pyrazolon, 1-(2′,5′-Disulfophenyl)-3-carboxy-5-pyrazolon, 1-Phenyl-3-carboxy-5-pyrazolon, 1-(4′-Sulfophenyl)-3-carboxy-5-pyrazolon,

1-(2'-Methyl-4'-sulfo-6'-chlorphenyl)-3-methyl-5-pyrazolon, 1-(3'-Chlorphenyl)-3-methyl-5-pyrazolon, 1-(2'-Chlorphenyl)-3-methyl-5-pyrazolon, 1-(4'-Chlorphenyl)-3-methyl-5-pyrazolon, 1-(2'-Chlor-4'-sulfophenyl)-3-methyl-5-pyrazolon, 1-(2'-Chlor-5'-sulfophenyl)-3-methyl-5-pyrazolon, 1-(4',8'-Disulfonaphthyl-2')-3-methyl-5-pyrazolon, 1-(2',5'-Dichlorphenyl)-3-methyl-5-pyrazolon, 1-(2',5'-Dichlor-4'-sulfophenyl)-3-methyl-5-pyrazolon, 1-(2',5'-Disulfophenyl)-3-methyl-5-pyrazolon, 1-(2'-Methyl-4'-sulfophenyl)-3-carboxy-5-pyrazolon, 1-(2'-Methyl-4'-sulfophenyl)-3-methyl-5-pyrazolon, 1-(3'-Nitrophenyl)-3-carboxy-5-pyrazolon, 1-(4'-Nitrophenyl)-3-carboxy-5-pyrazolon, 1-(3'-Nitrophenyl)-3-methyl-5-pyrazolon, 1-(4'-Nitrophenyl)-3-methyl-5-pyrazolon, 1-Phenyl-3-methyl-5-pyrazolon, 1-(3'-Sulfophenyl)-3-methyl-5-pyrazolon, 1-(4'-Sulfophenyl)-3-methyl-5-pyrazolon, 1-(3'-Sulfoylamidophenyl)-3-methyl-5-pyrazolon, 1-(4'-Sulfonylamidophenyl)-3-methyl-5-pyrazolon oder 1-(4'-Methylphenyl)-3-methyl-5-pyrazolon.

Insbesondere sind Pyrazolone geeignet, die in 3-Stellung durch Carboxyl substituiert sind und die als Substituenten in 1-Stellung folgende Reste tragen: 2'-Methylphenyl-, 2',6'-Dimethylphenyl-, 2'-Äthylphenyl-, 2'-Fluorphenyl-, 2'-Chlorphenyl-, 2',5'-Dichlorphenyl-, 2',6'-Dichlorphenyl-, 2'-Chlor-6'-methylphenyl-, 2'-Bromphenyl-, 2'-Trifluormethylphenyl-, 2'-Nitrophenyl-, 2'-Cyanphenyl-, 2'-Methoxyphenyl-, 2'-Methoxy-5'-chlorphenyl-, 2'-Äthoxyphenyl-, 2'-Propoxyphenyl-, 2'-Butoxyphenyl, 2'-Phenoxyphenyl-, 2'-(4''-Chlor)-phenoxyphenyl-, 2'-Acetylphenyl-, 2'-Benzoylphenyl-, 2'-Methylsulfonylphenyl- oder 2'-Phenylsulfonylphenyl-.

Acetoacetanilide sind vor allem Acetessiganilid, und die im Phenylkern durch Chlor, Methyl, Äthyl, Methoxy, Äthoxy oder Acetylamino ein- oder mehrfach substituierten Derivate.

Als Indolkupplungskomponenten sind beispielsweise 2-Methyl- oder 2-Phenylindol und die entsprechenden in 1-Stellung durch Methyl, β-Hydroxyäthyl, β-Carboxyäthyl oder β-Carbamoyläthyl substituierten Derivate zu nennen.

Naphthole sind beispielsweise: α-Naphthol, β-Naphthol, 1,5-Dioxynaphthalin, 1,6-Dioxynaphthalin, 1,7-Dioxynaphthalin, 2,7-Dioxynaphthalin, 2,3-Oxynaphthoesäureanilid, β-Oxynaphthoesäure-2'-anisidid, β-Oxynaphthoesäure-2',5'-dimethoxyanilid.

Naphthylamine sind beispielsweise: α-Naphthylamin, N-Phenyl-α-naphthylamin, N-Äthyl-α-naphthylamin, N-Phenyl-β-naphthylamin, 1,5-Naphthylendiamin, 1,8-Naphthylendiamin.

Naphtholsulfonsäuren sind vor allem: 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-di-sulfonsäure, 2-Naphthol-6,8-disulfonsäure, 2-Naphthol-3,6,8-trisulfonsäure, 1,8-Dioxynaphthalin-3,6-disulfonsäure, 2,6-Dioxynaphthalin-8-sulfonsäure, 2,8-Dioxynaphthalin-6-sulfonsäure.

Naphthylaminsulfonsäuren sind beispielsweise: 1-Naphthylamin-2-sulfonsäure, 1-Naphthylamin-3-sulfonsäure, 1-Naphthylamin-4-sulfonsäure, 1-Naphthylamin-5-sulfonsäure, 1-Naphthylamin-6-sulfonsäure, 1-Naphthylamin-6/7-sulfonsäure, 1-Naphthylamin-8-sulfonsäure, 1-Phenylaminonaphthalin-8-sulfonsäure, 2-Naphthylamin-5-sulfonsäure, 2-Naphthylamin-6-sulfonsäure, 2-Naphthylamin-7-sulfonsäure, 2-Naphthylamin-8-sulfonsäure, 2-Naphthylamin-3,6-disulfonsäure, 2-Naphthylamin-5,7-disulfonsäure, 2-Naphthylamin-6,8-disulfonsäure.

Aminonaphtholsulfonsäuren sind vor allem: 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure,

2-Amino-8-hydroxynaphthalin-6-sulfonsäure,
2-Amino-8-hydroxynaphthalin-3,6-disulfonsäure,
2-Amino-5-hydroxynaphthalin-1,7-disulfonsäure,
1-(N-Acetylamino)-8-hydroxynaphthalin-3,6-disulfonsäure,
1-(N-Benzoylamino)-8-hydroxynaphthalin-3,6-disulfonsäure,
1-(N-Acetylamino)-8-hydroxynaphthalin-4,6-disulfonsäure,
1-(N-Benzoylamino)-8-hydroxynaphthalin-4,6-disulfonsäure,
2-(N-Acetylamino)-5-hydroxynaphthalin-7-sulfonsäure,
2-(N-Methylamino)-5-hydroxynaphthalin-7-sulfonsäure,
2-(N-Phenylamino)-5-hydroxynaphthalin-7-sulfonsäure,
2-(N-Methylamino)-8-hydroxynaphthalin-6-sulfonsäure,
2-(N-Phenylamino)-8-hydroxynaphthalin-6-sulfonsäure.

Von besonderer Bedeutung sind sulfo- und/oder carboxylgruppenhaltige, gegebenenfalls Azogruppen tragende Kupplungskomponenten, die in ortho- oder p-Stellung zu einer Hydroxy- und/oder Aminogruppe kuppeln und die schon eine reaktive Gruppe X enthalten können.

Als Beispiele für solche Kupplungskomponenten seien genannt:
1-(3'-Aminophenyl)-3-carboxy-5-pyrazolon,
1-[3'-(4",6"-Dichlortriazinylamino-2"-)phenyl]-3-carboxy-5-pyrazolon,
1-(2'-Chlorphenyl)-3-carboxy-5-pyrazolon, 1-(2',5'-Dichlorphenyl)-3-carboxy-5-pyrazolon,
1-(2',6'-Dichlorphenyl)-3-carboxy-5-pyrazolon,
1-(2'-Methylphenyl)-3-carboxy-5-pyrazolon,
1-Hydroxynaphthalin-4-sulfonsäure, 1-Hydroxynaphthalin-4,8-disulfonsäure,
2-Naphthylamin-5-sulfonsäure, 1-Naphthylamin-6-sulfonsäure,
1-Naphthylamin-7-sulfonsäure, 1-Naphthylamin-6/7-sulfonsäure,
1-Naphthylamin-8-sulfonsäure, 2-Amino-8-hydroxynaphthalin-6-sulfonsäure,
2-N-Methylamino-8-hydroxynaphthalin-6-sulfonsäure,
2-Acetylamino-5-hydroxynaphthalin-7-sulfonsäure,
2-Acetylamino-8-hydroxynaphthalin-6-sulfonsäure,
1-Acetylamino-8-hydroxynaphthalin-3,6-disulfonsäure,
1-Benzoylamino-8-hydroxynaphthalin-3,6-disulfonsäure,
1-Acetylamino-8-hydroxynaphthalin-4,6-disulfonsäure oder
1-Benzoylamino-8-hydroxynaphthalin-4,6-disulfonsäure.
Weiterhin
2-[(5'-Hydroxy-7'-sulfo)-naphthylamino-2'-]-4,6-dichlortriazin,
2-[(5'-Hydroxy-7'-sulfo-)-naphthylmethylamino-2'-]-4,6-dichlortriazin,
2-[(8'-Hydroxy-6'-sulfo)-naphthylamino-2'-]-4,6-dichlortriazin,
2-[(8'-Hydroxy-6'-sulfo)-naphthylmethylamino-2'-]-4,6-dichlortriazin,
2-[(8'-Hydroxy-3',6'-disulfo)-naphthylamino-1'-]-4,6-dichlortriazin,
2-[(8'-Hydroxy-4',6'-disulfo)-naphthylamino-1'-]-4,6-dichlortriazin
sowie deren Monokondensationsprodukte mit primären und sekundären aliphatischen und aromatischen Aminen, wie beispielsweise
Ammoniak, Methyl- und Äthylamin, $\beta$-Hydroxyäthylamin, Dioxäthylamin, Hydrazin, Anilin, N-Methylanilin, Morpholin, Toluidin, Anisidin, Kresidin, Anilin-o, m- und p-sulfonsäure, Anilin-2,5-disulfonsäure, o-, m- und p-Aminobenzoesäure oder N-Methylanthranilsäure.

Weiterhin sind als Kupplungskomponenten besonders zu nennen:
1-Amino-8-hydroxynaphthalin-3,6-disulfonsäure und
1-Amino-8-hydroxynaphthalin-4,6-disulfonsäure
sowie deren durch saure Kupplung erhaltenen Arylazokupplungsprodukte der Formel

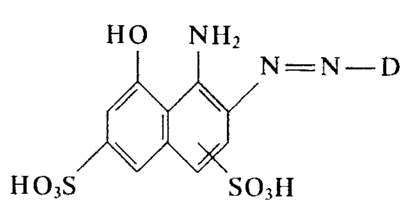

wobei D beispielsweise ein Rest folgender Formel sein kann:

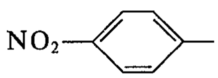 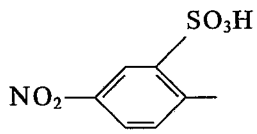 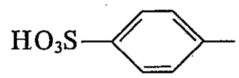 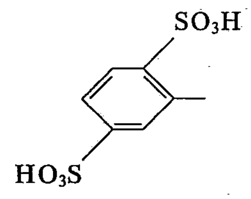

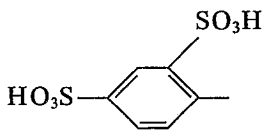 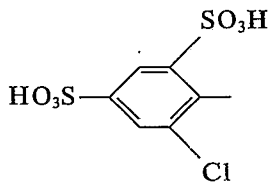 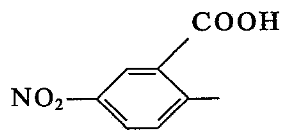

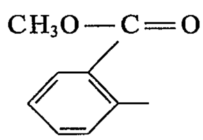 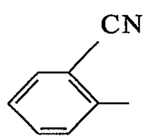 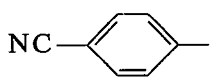 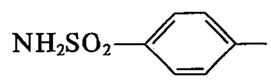

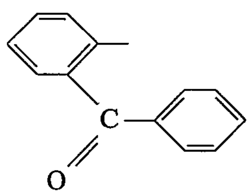 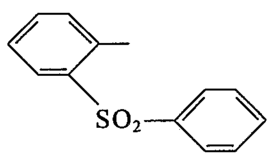 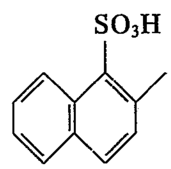

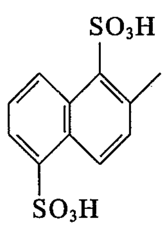 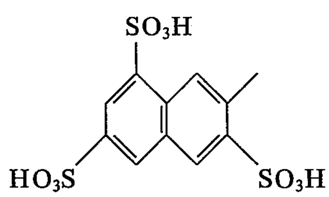 oder 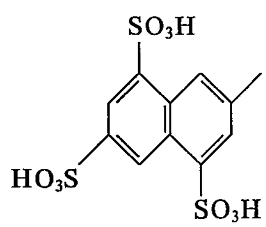

sowie 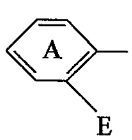

worin A und E die genannte Bedeutung haben.

Weiterhin kann D eine reaktive Gruppe tragen, wobei für D besonders Reste der Formel

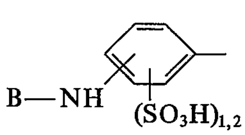

zu nennen sind, in der B ein reaktives Triazinderivat ist.

Substituenten R sind vorzugsweise aliphatische, cycloaliphatische und aromatische Reste insbesondere gegebenenfalls durch Aryl, Hydroxy, $C_1$- bis $C_8$-Alkoxy, Aryloxy, Arylsulfonyl, Hydroxysulfonyl, Phosphonyl oder Carboxyl substituiertes gegebenenfalls durch Sauerstoff unterbrochenes $C_1$- bis $C_{12}$-Alkyl oder gegebenenfalls durch Acylamino, Nitro, Halogen, $C_1$- bis $C_4$-Alkyl, $C_1$- bis $C_4$-Alkoxy, Hydroxy, Phenoxy, Carboxyl, Hydroxysulfonylmethyl oder Hydroxysulfonyl substituiertes Phenyl oder Naphthyl sowie Cyclohexyl oder Arylvinyl.

Unter Arylresten werden erfindungsgemäß insbesondere gegebenenfalls durch Hydroxy, $C_1$- bis $C_4$-Alkoxy, $C_1$- bis $C_4$-Alkyl, Fluor, Chlor, Brom, Carboxyl, Nitro, Hydroxysulfonylmethyl, Acylamino oder Hydroxysulfonyl substituierte Phenyl- oder Naphthylreste verstanden.

Einzelne Reste R sind neben den bereits genannten beispielsweise:

$CH_3$, $C_2H_5$, n-$C_3H_7$, i-$C_3H_7$, n-$C_4H_9$, i-$C_4H_9$, n-$C_5H_{11}$, n-$C_7H_{15}$, n-$C_8H_{17}$,

$CH_2C_6H_5$, $C_2H_4C_6H_5$, $CH_2C_6H_4—CH_3$, $CH_2C_6H_4Cl$, $CH_2C_6H_4SO_3H$,

$CH_2C_6H_4OH$, $C_2H_4OH$, i-$C_3H_6OH$, n-$C_3H_6OH$, $CH_2OCH_3$, $CH_2OC_2H_5$,

$CH_2OC_3H_7$, $CH_2O$-i-$C_4H_9$, $CH_2OC_6H_{13}$, $CH_2OC_8H_{17}$, $C_2H_4OCH_3$, $C_2H_4OC_2H_5$,

$C_2H_4OC_3H_7$, $C_2H_4O$-i-$C_3H_7$, $C_2H_4OC_4H_9$, $C_2H_4OC_5H_{11}$, $C_2H_4OC_6H_{13}$,

$C_2H_4OC_8H_{17}$, $C_3H_6OCH_3$, $C_3H_6OC_2H_5$, $C_3H_6OC_3H_7$, $C_4H_8OCH_3$,

$CH(CH_3)OCH_3$, $CH(CH_3)OC_2H_5$, $CH_2OC_2H_4OCH_3$, $CH_2OC_2H_4OC_2H_5$,

$CH_2OC_2H_4OC_3H_7$, $CH_2OC_2H_4OC_6H_{13}$, $C_2H_4OC_2H_4OCH_3$, $C_2H_4OC_2H_4OC_2H_5$,

$C_2H_4OC_2H_4OC_3H_7$, $C_2H_4OC_2H_4OC_6H_{13}$, $C_3H_6OC_2H_4OCH_3$, $C_4H_8OC_2H_4OCH_3$,

$CH_2OC_2H_4OH$, $CH_2OC_3H_6OH$, $CH_2OC_2H_4OC_2H_4OH$, $C_2H_4OC_2H_4OH$,

$C_2H_4OC_2H_4OC_2H_4OH$, $CH_2OCH_2C_6H_5$, $CH_2OC_2H_4C_6H_5$, $CH_2OCH_2C_6H_4Cl$,

$CH_2OCH_2C_6H_4OH$, $C_2H_4OCH_2C_6H_5$, $C_2H_4OCH_2C_6H_4CH_3$,

$C_2H_4OC_2H_4OCH_2C_6H_5$, $C_2H_4OCH_2C_6H_4OH$, $C_3H_6OCH_2C_6H_5$, $C_2H_4OC_2H_4C_6H_5$,

$C_2H_4OCH_2C_6H_4SO_3H$, $CH_2OC_6H_5$, $CH_2OC_6H_4Cl$, $CH_2OC_6H_4SO_3H$,

$CH_2OC_6H_4CH_3$, $C_2H_4OC_6H_5$, $C_2H_4OC_{10}H_7$, $C_2H_4OC_6H_4OH$, $C_2H_4OC_6H_4SO_3H$,

$C_2H_4OC_6H_4COOH$, $C_2H_4OC_{10}H_6SO_3H$, $C_3H_6OC_6H_5$, $CH_2OC_2H_4OC_6H_5$,

$C_2H_4OC_2H_4OC_6H_5$, $C_2H_4OC_2H_4OC_{10}H_7$, $C_2H_4OC_2H_4OC_6H_4SO_3H$,

$C_2H_4OC_2H_4OC_6H_4COOH$, $CH_2OC_2H_4OC_2H_4OC_6H_5$, $C_2H_4OC_2H_4OC_3H_6OC_6H_5$,

$CH_2SO_2CH_3$, $C_2H_4SO_2CH_3$, $CH_2SO_2C_6H_5$, $C_2H_4SO_2C_6H_5$, $C_2H_4SO_2C_6H_4CH_3$,

$CH_2SO_3H$, $C_2H_4SO_3H$, $CH(CH_3)SO_3H$, $CH(CH_3)CH_2SO_3H$, $C_2H_4OC_2H_4SO_3H$,

$C_3H_6SO_3H$, $C_4H_8SO_3H$, $CH_2OCH_2SO_3H$, $CH_2PO(OC_2H_5)_2$, $C_2H_4PO(OC_2H_5)$,

$CH_2COOH$, $C_2H_4COOH$, $C_3H_6COOH$, $C_6H_{12}COOH$, $C_6H_5$, $C_{10}H_7$,

o-, m-, p-$C_6H_4NHCOCH_3$, o-, m-, p-$C_6H_4NHCOC_6H_5$, o-, m-, p-$C_6H_4NO_2$,

o-, m-, p-$C_6H_4Cl$, o-, m-, p-$C_6H_4Br$, $C_6H_3Cl_2$, $C_6H_2Cl_3$,

o-, m-, p-$C_6H_4CH_3$, o-, m-, p-$C_6H_4C_2H_5$, o-, m-, p-$C_6H_4—OCH_3$,

o-, m-, p-$C_6H_4OC_2H_5$, o-, m-, p-$C_6H_4OH$, $C_6H_3(CH_3)—NO_2—$,

p-$C_6H_4O-C_6H_5$, o-, m-, p-$C_6H_4COOH$, o-, m-, p-$C_6H_4(CH_2SO_3H)$,

o-, m-, p-$C_6H_4C_2H_4SO_3H$, 2,4-$C_6H_3(SO_3H)_2$, $C_{10}H_6SO_3H$, $C_{10}H_5(SO_3H)_2$,

$CH{=}CH-C_6H_5$ oder $CH{=}CH-C_6H_4SO_3H$.

Der Ring A kann z. B. noch ein- oder mehrfach durch Fluor, Chlor, Brom, $C_1$- bis $C_4$-Alkyl, $C_1$- bis $C_4$-Alkoxy, Nitro, Hydroxysulfonyl, gegebenenfalls substituiertes Sulfamoyl, Sulfinsäureester, Trifluormethyl, gegebenenfalls substituiertes Carbamoyl oder Carboxyl oder durch einen anellierten Ring substituiert sein.

Einzelne Substituenten sind neben den bereits genannten beispielsweise:

$CH_3$, $C_2H_5$, n- oder i-$C_3H_7$, n- oder i-$C_4H_9$, $OCH_3$, $OC_2H_5$, $OC_3H_7$, $OC_4H_9$,

$SO_2NH_2$, $SO_2NHCH_3$, $SO_2NHC_2H_5$, $SO_2NHC_4H_9$, $SO_2NHC_6H_5$,

$SO_2NHC_6H_4CH_3$, $SO_2N(CH_3)_2$, $SO_2N(C_2H_5)_2$, $SO_2N(C_3H_7)_2$, $SO_2OCH_3$,

$SO_2OC_6H_5$, $SO_2OC_6H_4CH_3$, $SO_2OC_6H_4Cl$, $SO_2OC_6H_3(CH_3)_2$,

$SO_2OC_6H_5NHCOCH_3$, $SO_2OC_6H_4SO_3H$, $CONH_2$, $CON(CH_3)_2$, $CON(C_2H_5)_2$,

$CONHC_6H_5$ oder $CONHC_6H_4CH_3$.

Die reaktiven Gruppen X können in den Resten K und/oder R und/oder A stehen. Gegebenenfalls können sie auch über ein azogruppenhaltiges Brückenglied an K gebunden sein. Reaktive Reste im Sinne der Erfindung sind alle Gruppen, die in Reaktivfarbstoffen zur Herstellung einer kovalenten Bindung mit dem Substrat befähigt sind. Diese Gruppen sind zahlreich in der Literatur beschrieben, sie leiten sich insbesondere von Triazinen, Pyrimidinen, Pyridazinen, Chinoxalinen, Chinazolinen, Phthalazinen, Thiazolen, Benzthiazolen, Vinylsulfonen oder Vorstufen davon, Acrylverbindungen, Halogenpropionylverbindungen, Halogenacetylverbindungen, Fluorcyclobutylverbindungen und Säuren des Phosphors ab.

Auszugsweise seien im folgenden einige Verbindungen genannt, die über eine Imino-, Methylimino-, Iminomethylen- oder Methyliminomethylenbrücke an den Farbstoff gebunden sein können und die eine mit Fasern reaktionsfähige Gruppe enthalten:

Acryloylchlorid, β-Chlorpropionylchlorid, β-Brompropionylchlorid, Chloracetylchlorid,
α,β-Dichlorpropionylchlorid, 2,3-Dichlorchinoxalin-5- oder 6-carbonylchlorid,
2,3-Dichlorchinazolin-5- oder 6-sulfonylchlorid,
2,4-Dichlorchinazolin-6- oder 7-sulfonylchlorid,
2,4,6-Trichlorchinazolin-7- oder 8-sulfonylchlorid,
2,4,7- oder 2,4,8-Trichlorchinazolin-6-sulfonylchlorid,
2,4-Dichlorchinazolin-6-carbonylchlorid, 2,4-Dichlorpyrimidin-5-carbonylchlorid,
1-Phenyl-4′-(carbonylchlorid)-4,5-dichlor-6-pyridazon, 2,4,6-Trichlorpyrimidin,
2,4,6-Trichlor-5-methylpyrimidin, 2,4,6-Tribrom-5-cyanpyrimidin,
2,4,5,6-Tetrachlorpyrimidin, 2,4,6-Trifluorpyrimidin,
2,4,6-Trifluor-5-chlor-pyrimidin oder 1,4-Dichlorphthalazin-6-carbonylchlorid.

Insbesondere seien genannt:
Cyanurfluorid, Cyanurchlorid, Cyanurbromid, 2,4-Dichlor-6-methyltriazin,
2,4-Dichlor-6-phenyltriazin

sowie die primären Kondensationsprodukte von Cyanurchlorid mit Ammoniak, Aminen, organischen Hydroxy- und Mercaptoverbindungen, also z. B.
Methanol, Äthanol, Phenol, α-Naphthol, β-Naphthol, Chlorphenole, Cresole,
sulfonierte Phenole, Thiophenol, Thioglycolsäure, Methylmercaptan,
Dimethyldithiocarbaminsäure, 2-Mercaptobenzthiazol, Thioacetamid,

primäre Alkylamine, wie z. B.
Methylamin, Äthylamin, n-Propylamin, Dimethylamin und Diäthylamin, β-Hydroxyäthylamin,
Di-(β-Hydroxyäthyl)amin, Piperidin, Morpholin, β-Methoxyäthylamin, Aminoessigsäure,
Anilin, N-Methylanilin, Toluidin, Anisidin, Anilin-2,5-, 2,4- und 3,5-disulfonsäure,
Anilin-o-, m- und p-sulfonsäure, N-Methylanilin-o-, m- und p-Sulfonsäure,
o-, m- und p-Aminobenzoesäure, 4- und 5-Sulfo-2-aminobenzoesäure,
2-Aminotoluol-4-sulfonsäure, 5-Amino-2-hydroxybenzoesäure, β-Aminoäthansulfonsäure,
N-Methylaminoäthansulfonsäure, und Mono- und Disulfonsäuren von
1-Amino- und 2-Aminonaphthalin.

Zur Herstellung der Verbindungen der Formel I kann man z. B. eine Diazoniumverbindung eines Amins der Formel

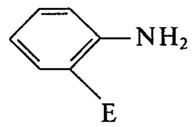

ein- oder gegebenenfalls zweimal mit einer Kupplungskomponente der Formel

$H_mK$

umsetzen; der oder die Reste X können dabei in der Diazo- und/oder Kupplungskomponente stehen oder können nachträglich eingeführt werden.

Zur Herstellung einer Gruppe von Disazoverbindungen der Formel I, die den Rest D—N=N— enthält, kann man auch zunächst eine Diazoniumverbindung der Formel

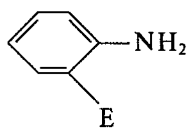

mit einer zweifach kuppelnden Kupplungskomponente der Formel

$H_mK$

umsetzen und anschließend ein diazotiertes aromatisches Amin der Formel

$NH_2—D$

nach bekannten Methoden aufkuppeln; dabei kann die reaktive Gruppe X in einer oder beiden Diazokomponenten stehen oder nachträglich eingeführt werden.

Besondere Bedeutung kommt der Herstellung von Disazofarbstoffen der Formel I zu, in denen mit Diazokomponenten oben genannter Formeln in umgekehrter Reihenfolge gekuppelt wurde und von denen die eine oder beide Diazokomponenten einen reaktiven Rest X tragen, der auch nachträglich eingeführt werden kann.

Die Herstellungsmethoden, d. h. auch Variationen der angegebenen Herstellungsweise sind im Prinzip bekannt und bieten gegenüber diesen Methoden keine Besonderheiten. Einzelheiten der Herstellung können den Beispielen entnommen werden, in denen sich Angaben über Teile und Prozente, sofern nicht anders vermerkt, auf das Gewicht beziehen.

Die Verbindungen der Formel I ergeben je nach Konstitution gelbe bis blaue Färbungen, die sich im allgemeinen durch gute Echtheiten, wie Licht-, Naß- und Waschechtheiten auszeichnen. Ferner ist die im allgemeinen gute Ausgiebigkeit der Farbstoffe zu erwähnen. Sie sind vorzugsweise für hydroxyl- und aminogruppenhaltige Substrate geeignet.

Als Färbeverfahren kommen je nach reaktivem Rest alle gebräuchlichen Verfahren in Betracht.

Von besonderer Bedeutung ist z. B. eine Gruppe von Verbindungen der Formel Ia

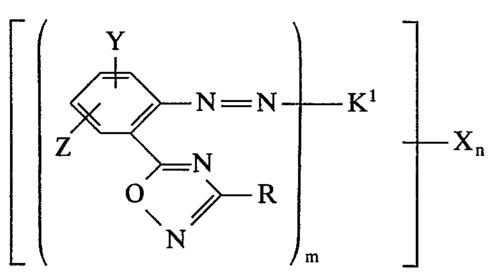

(Ia)

in der

- Y Wasserstoff, Chlor, Brom, Nitro, Hydroxysulfonyl oder ein Triazinylaminorest,
- Z Wasserstoff oder Chlor und
- $K^1$ der Rest einer sulfonsäuregruppenhaltigen Kupplungskomponente der Pyrazolon-, Naphtholsulfonsäure-, Aminonaphthalinsulfonsäure-, Aminonaphtholsulfonsäure- oder durch Arylazo substituierten Aminonaphtholsulfonsäurereihe ist und
- R, X, m und n die angegebene Bedeutung haben.

m ist vorzugsweise 1 und
n ist vorzugsweise 1 oder 2.

Bevorzugte Reste R sind beispielsweise:

$CH_3$, $C_2H_5$, n-$C_3H_7$, i-$C_3H_7$, n-$C_4H_9$, i-$C_4H_9$, $CH_2C_6H_5$, $CH_2C_6H_4CH_3$, $CH_2C_6H_4Cl$, $CH_2C_6H_4SO_3H$, $C_2H_4OH$, $CH_2OCH_3$, $CH_2OC_2H_5$, $CH_2OC_3H_7$, $CH_2OC_6H_{13}$, $C_2H_4OCH_3$, $C_2H_4OC_2H_5$, $C_2H_4OC_3H_7$, $C_2H_4OC_4H_9$, $C_2H_4OC_6H_{13}$, $C_3H_6OCH_3$, $CH(CH_3)OCH_3$, $CH_2OC_2H_4OCH_3$, $CH_2OC_2H_4OC_2H_5$, $CH_2OC_2H_4OCH_2C_6H_5$, $C_2H_4OC_2H_4OCH_3$, $C_2H_4OC_2H_4OC_2H_5$, $C_2H_4OC_2H_4OC_3H_7$, $C_2H_4OC_2H_4OC_6H_{13}$, $C_2H_4OC_2H_4OCH_2C_6H_5$, $C_2H_4OCH_2C_4H_6SO_3H$, $CH_2OC_6H_5$, $CH_2OC_6H_4SO_3H$, $C_2H_4OC_6H_5$, $C_2H_4OC_6H_4SO_3H$, $C_2H_4OC_6H_4COOH$, $CH_2OC_2H_4OC_6H_5$, $C_2H_4OC_2H_4OC_6H_5$, $C_2H_4OC_2H_4OCH_2C_6H_5$, $C_2H_4SO_2C_6H_5$, $C_2H_4SO_2C_6H_4CH_3$, $CH_2SO_2CH_3$, $CH_2SO_3H$, $C_2H_4SO_3H$, $CH(CH_3)SO_3H$, $CH(CH_3)CH_2SO_3H$, $CH_2COOH$, $C_6H_5$, o-, m-, p-$C_6H_4Cl$, o-, m-, p-$C_6H_4CH_3$, o-, m-, p-$C_6H_4NO_2$, o-, m-, p-$C_6H_4(CH_2SO_3H)$, o-, m-, p-$C_6H_4SO_3H$ oder 2,4-$C_6H_3(SO_3H)_2$.

Bevorzugte Reste X sind z. B.:

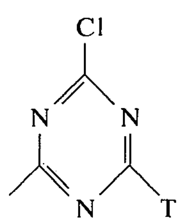

wobei T z. B.

Cl, $OCH_3$, $OC_2H_5$, $OC_3H_7$(i), $OC_6H_5$, $CH_3$, $C_6H_5$, $NH_2$, $NHC_6H_5$, $NHC_6H_4SO_3H$, $NHC_{10}H_6SO_3H$,

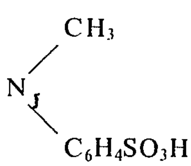 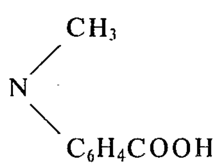 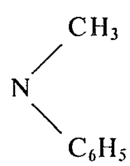 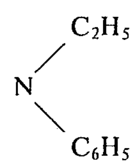

oder

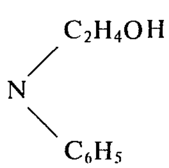

ist.

Weiterhin sind bevorzugt:

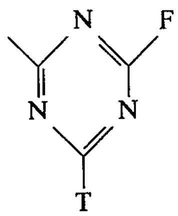
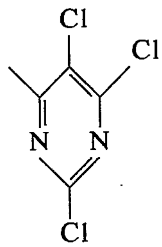
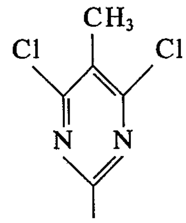
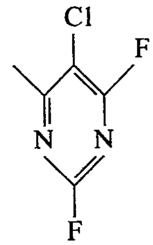

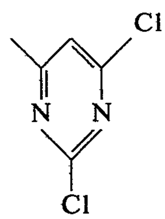
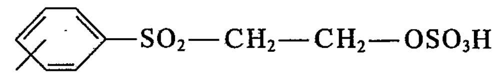
m-, p-

Allgemein bevorzugt sind Disazofarbstoffe der Formel I.

## Beispiel 1

Der aus 16,7 Teilen diazotiertem 2-[3′-(2″-Sulfophenyl)-1′,2′,4′-oxdiazolyl-5′]-4-nitroanilin und 14,2 Teilen 1-(4′-Sulfophenyl)-3-carboxypyrazolon-5 durch Kupplung im schwach sauren pH-Bereich erhaltene Azofarbstoff wird mit 6,4 Teilen Schwefelnatrium bei 30 bis 50° C eine Stunde reduziert. Dann wird eine Stunde bei 30 bis 50° C mit 6,3 Teilen Wasserstoffperoxid in 20 Teilen Wasser und 10 Teilen Eis behandelt. Nach Abkühlung der Reaktionsmischung auf 0° C wird mit einer feinen Suspension von 9,25 Teilen Cyanurchlorid in 60 Teilen Wasser und 30 Teilen Eis versetzt und der pH-Wert mit 7,2 Teilen einer 20%igen Natriumhydroxidlösung bei 4 bis 5 gehalten. Sobald sich keine freie Aminogruppe mehr nachweisen läßt, werden 6,4 Teile N-Methylanilin zugegeben. Die Temperatur wird nun auf 40°C gesteigert und mit 14 Teilen einer 20%igen Natriumhydroxidlösung der pH im schwach sauren bis neutralen Bereich gehalten. Der fertige Farbstoff wird mit 150 bis 200 Teilen Kaliumchlorid abgeschieden, abgesaugt und getrocknet. Er färbt Cellulosegewebe in brillanten Gelborangetönen.

Wenn anstelle der Diazokomponente im Beispiel 1 diazotiertes 2-[3′-(2″-Sulfoäthyl)-1′,2′,4′-oxdiazolyl-5′]-4-nitroanilin verwendet wird, so erhält man einen Farbstoff mit ähnlichen Eigenschaften.

## Beispiel 2

Der durch Kupplung von 17,5 Teilen diazotiertem 2-[3′-(β-Hydroxysulfonyläthyl)-1′,2′,4′-oxdiazolyl-5′]-4-sulfoanilin und 9,5 Teilen 1-(4′-Aminophenyl)-3-methylpyrazolon-5 erhaltene Azofarbstoff wird mit 9,5 Teilen Cyanurchlorid 2 Stunden bei 10°C umgesetzt, wobei der pH-Wert mit 3,5 Teilen Natriumhydroxid zwischen 5 und 7 gehalten wird. Nach Zufügen von 15 Teilen 25%iger Ammoniaklösung wird 3 Stunden bei 50° C gerührt. Der aus neutralem Medium mit Natriumchlorid abgeschiedene Farbstoff färbt Baumwolle in gelben Tönen.

## Beispiel 3

Das Kupplungsprodukt von 10,9 Teilen 2-Amino-5-nitrobenzolsulfonsäure und 15,3 Teilen 1-Amino-8-hydroxynaphthalin-3,6-disulfonsäure in 600 Teilen Wasser wird mit Eis auf 0 bis 5°C gekühlt. 11,8 Teile diazotiertes 2-(3′-Phenyl-1′,2′,4′-oxdiazolyl-5′)anilin werden zugesetzt und bei 0 bis 5° C zum Disazofarbstoff aufgekuppelt. Dabei wird der Kupplungs-pH-Wert mit 26,5 Teilen Soda bei 7 bis 8 gehalten. Man reduziert mit 6 Teilen Schwefelnatrium bei 40 bis 60° C, versetzt anschließend mit 10 Teilen Wasserstoffsuperoxid (50%) und rührt 1 Stunde nach. Der pH-Wert wird mit Salzsäure auf 7 gestellt, mit Eis auf 5 bis 10°C gekühlt und 9,6 Teile Cyanurchlorid eingetragen. Der Acylierungs-pH-Wert wird mit 4,5 Teilen Natriumhydrogencarbonat bei 6 bis 7 gehalten. Gegen Ende der Reaktion fällt der Farbstoff im Reaktionsgemisch aus; es wird ohne Salzzusatz abgesaugt und getrocknet. Man erhält ein schwarzes Pulver, das Baumwolle in dunkelgrünen Tönen färbt.

Beispiel 4

Einen ähnlichen Farbstoff erhält man, wenn der reduzierte Disazofarbstoff anstelle von Cyanurchlorid mit 10,8 Teilen Phenyldichlortriazin bei 50—60° C und pH = 6—7 umgesetzt wird.

Einen ähnlichen Farbstoff erhält man, wenn man den Dichlortriazinfarbstoff aus Beispiel 3 mit Ammoniak bei 40 bis 60° C umsetzt.

Die in Beispiel 3 und 4 beschriebenen Farbstoffe entsprechen der allgemeinen Formel

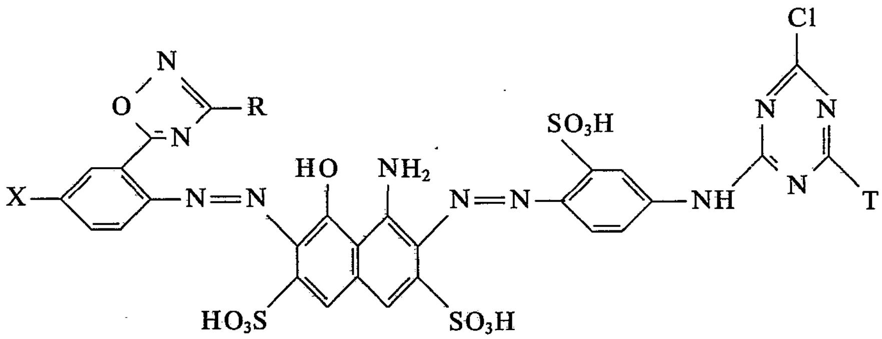

wobei X = H, R = Phenyl und T = Cl, Phenyl bzw. $NH_2$ ist. Weitere Farbstoffe, die nach einem der in Beispiel 3 oder 4 beschriebenen Wege erhalten werden können, und die oben genannter Formel entsprechen, sind in Tabelle 1 zusammengefaßt.

Tabelle 1

| Beispiel | X | R | T | Farbton |
|---|---|---|---|---|
| 5 | H | $C_6H_5$ | NH— 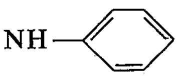 | grün |
| 6 | H | $C_6H_5$ | NH— 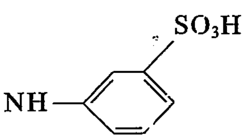 | grün |
| 7 | H | $C_6H_5$ | 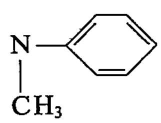 | grün |
| 8 | H | $C_6H_4$—$SO_3H$ (o-) | Cl | grün |
| 9 | H | $C_6H_4$—$SO_3H$ (o-) | $NH_2$ | grün |
| 10 | H | $C_6H_4$—Cl (p-) | Cl | grün |
| 11 | H | $C_6H_4$—Cl (p-) | NH— 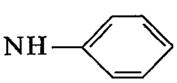 | grün |
| 12 | H | $CH_3$ | Cl | grün |
| 13 | H | $CH_3$ | $NH_2$ | grün |
| 14 | H | $CH_2$—COOH | Cl | grün |
| 15 | H | $CH_2$—COOH | $CH_3$—N— 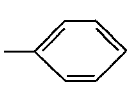 | grün |
| 16 | Cl | $C_6H_4$—$SO_3H$ (o-) | Cl | grün |
| 17 | Cl | $C_6H_4$—$SO_3H$ (o-) | NH— 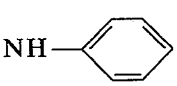 | grün |

Fortsetzung

| Beispiel | X | R | T | Farbton |
|---|---|---|---|---|
| 18 | Cl | $C_6H_4-SO_3H$ (o-) | $NH_2$ | grün |
| 19 | $SO_3H$ | $C_6H_5$ | NH 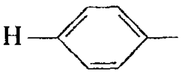 $SO_2NH_2$ | grün |
| 20 | $SO_3H$ | $C_6H_5$ | NH 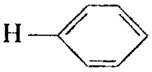 | grün |
| 21 | $SO_3H$ | $C_6H_5$ | 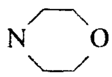 | grün |
| 22 | $SO_3H$ | $C_6H_5$ | $NH-C_2H_5$ | grün |
| 23 | $SO_3H$ | $C_6H_5$ | $NH_2$ | grün |
| 24 | $SO_3H$ | $C_6H_5$ | Cl | grün |
| 25 | $SO_3H$ | $CH_2-O-C_6H_5$ | Cl | grün |
| 26 | $SO_3H$ | $CH_2-O-C_6H_5$ | $NH_2$ | grün |
| 27 | H | $C_6H_4-CH_2SO_3H$ (o-) | Cl | grün |
| 28 | H | $C_6H_4-CH_2SO_3H$ (o-) | $NH_2$ | grün |
| 29 | $SO_3H$ | $CH_2-O-CH_3$ | Cl | grün |
| 30 | $SO_3H$ | $CH_2-O-CH_3$ | $NH_2$ | grün |
| 31 | $SO_3H$ | $C_6H_4-CH_3$ (o-) | Cl | grün |
| 32 | $SO_3H$ | $C_6H_4-CH_3$ (o-) | $NH_2$ | grün |

## Beispiel 33

Das sekundäre Kondensationsprodukt aus 54 Teilen 1,3-Phenylendiamin-4-sulfonsäure, 56,5 Teilen Cyanurchlorid und 59 Teilen 3-Sulfo-4-methoxyanilin wird 2 h salzsauer diazotiert, mit 20 Teilen Natriumformiat und 12 Teilen Natriumbikarbonat auf pH 3 gestellt, mit einer Suspension von 92 Teilen 1-Amino-8-hydroxynaphthalin-3,6-disulfonsäure in 600 Teilen Wasser versetzt und bei pH 3 mit 15 Teilen Formiat ausgekuppelt. Man versetzt mit 95 Teilen diazotierter 2-(3'-Phenyl-1',2',4'-oxdiazolyl-5)-anilin-4-sulfonsäure und kuppelt mit 25,2 Teilen Natriumbikarbonat bei pH = 6,5 aus. Der Farbstoff liegt im Reaktionsgemisch zum Teil ausgefallen vor; es wird mit Kaliumchlorid ausgesalzen und getrocknet. Der Farbstoff färbt Baumwolle in blaugrünen Tönen.

## Beispiel 34

Das salzsauer diazotierte primäre Kondensationsprodukt aus 54 Teilen 1,3-Phenylendiamin-4-sulfonsäure und 56,5 Teilen Cyanurchlorid wird mit 20 Teilen Natriumformiat auf pH = 3 gestellt, mit einer Suspension von 92 Teilen 1-Amino-8-hydroxynaphthalin-3,6-disulfonsäure in 600 Teilen Wasser versetzt und bei pH 3 mit 15 Teilen Formiat ausgekuppelt. 95 Teile diazotierte 2-(3'-Phenyl-1',2',4'-oxdiazolyl-5')-anilin-4-sulfonsäure werden eingetragen und mit 25,2 Teilen Natriumbikarbonat bei pH = 6,5 gekuppelt. Man versetzt das Reaktionsgemisch mit 12,5 Teilen Dinatriumhydrogenphosphat-2-hydrat und 11 Teilen Natriumdihydrogenphosphat-2-hydrat und salzt aus. Der Farbstoff färbt Baumwolle in blaugrünen Tönen.

Beispiel 35

Einen ähnlichen Farbstoff erhält man, wenn man den in Beispiel 34 beschriebenen Dichlortriazin-Farbstoff mit 76 Teilen konz. Ammoniak bei 40 bis 60° C umsetzt.

Die in Beispiel 33 bis 35 beschriebenen Farbstoffe entsprechen der allgemeinen Formel

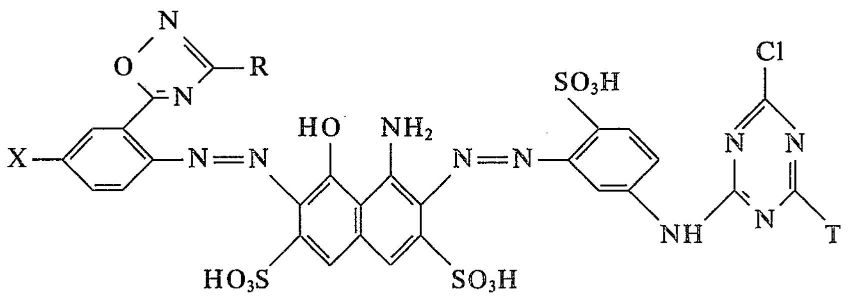

in der X = $SO_3H$, R = Phenyl und T = Cl, $NH_2$ bzw. 3-Sulfo-4-methoxanilin ist.

Weitere Farbstoffe, die nach einem der dort beschriebenen Wege erhalten werden können, und die der oben genannten Formel entsprechen, sind in Tabelle 2 zusammengefaßt.

Tabelle 2

| Beispiel | X | R | T | Farbton |
|---|---|---|---|---|
| 36 | $SO_3H$ | $C_6H_5$ | NH— 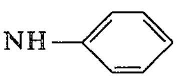 | blaugrün |
| 37 | $SO_3H$ | $CH_2—O—C_6H_5$ | Cl | blaugrün |
| 38 | $SO_3H$ | $CH_2—O—C_6H_5$ | $NH_2$ | blaugrün |
| 39 | H | $C_6H_4—SO_3H$ (o-) | Cl | blaugrün |
| 40 | H | $C_6H_4—SO_3H$ (o-) | N— 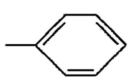 $CH_3$ | blaugrün |
| 41 | $SO_3H$ | $CH_3$ | $NH_2$ | blaugrün |
| 42 | $SO_3H$ | $CH_3$ | Cl | blaugrün |
| 43 | $SO_3H$ | $C_6H_4—Cl$ (o-) | Cl | blaugrün |
| 44 | $SO_3H$ | $C_6H_4—Cl$ (o-) | $NH_2$ | blaugrün |
| 45 | H | $CH_2—COOH$ | Cl | blaugrün |
| 46 | H | $CH_2—COOH$ | NH— 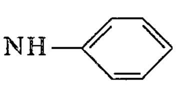 | blaugrün |
| 47 | $SO_3H$ | $CH_2—O—CH_3$ | $NH_2$ | blaugrün |
| 48 | $SO_3H$ | $CH_2—O—CH_3$ | Cl | blaugrün |
| 49 | $SO_3H$ | $C_6H_4—CH_3$ (o-) | $NH_2$ | blaugrün |
| 50 | $SO_3H$ | $C_6H_4—CH_3$ (o-) | Cl | blaugrün |
| 51 | H | $C_6H_4—CH_2SO_3H$ (o-) | NH— 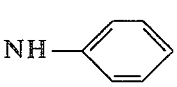 | blaugrün |
| 52 | H | $C_6H_4—CH_2SO_3H$ (o-) | Cl | blaugrün |

## Beispiel 53

15,9 Teile salzsauer diazotierte 2-(3'-Phenyl-1',2',4'-oxdiazolyl-5')anilin-4-sulfonsäure werden mit 6,8 Teilen Natriumformiat und 3,8 Teilen Natriumbikarbonat auf pH=3 gestellt und eine mit 6,8 Teilen Natriumformiat gepuffert Suspension von 15,6 Teilen 1-Amino-8-hydroxynaphthalin-3,6-disulfosäure in 200 Teilen Wasser eingetragen. Man kuppelt bei pH=3 aus und versetzt mit einer salzsauer diazotierten Suspension von 18,5 Teilen des primären Konsensationsproduktes aus 10,5 Teilen Cyanurchlorid und 10,4 Teilen 1,3-Phenylendiamin-4-sulfonsäure. Der Kupplungs-pH-Wert wird mit 90 Teilen 2 n Natriumcarbonatlösung auf 7 bis 8 gestellt und ausgekuppelt. Der Farbstoff wird mit Kochsalz abgeschieden und getrocknet. Man erhält ein schwarzes Pulver, das Baumwolle in grünstichig blauen Tönen färbt.

## Beispiel 54

Einen ähnlichen Farbstoff erhält man, wenn man anstelle des primären Kondensationsproduktes aus Cyanurchlorid und 1,3-Phenylendiamin-4-sulfonsäure aus Beispiel 53 das sekundäre Kondensationsprodukt aus 10,5 Teilen Cyanurchlorid, 10,4 Teilen 1,3-Phenylendiamin-4-sulfonsäure und 9,4 Teilen Metanilsäure verwendet. Verwendet man anstelle von Metanilsäure, Sulfanilsäure, Clevesäure, Äthanolamin oder Toluidin, so erhält man Farbstoff mit ähnlichen Eigenschaften.

Die in Beispiel 53 und 54 beschriebenen Farbstoffe entsprechen der allgemeinen Formel

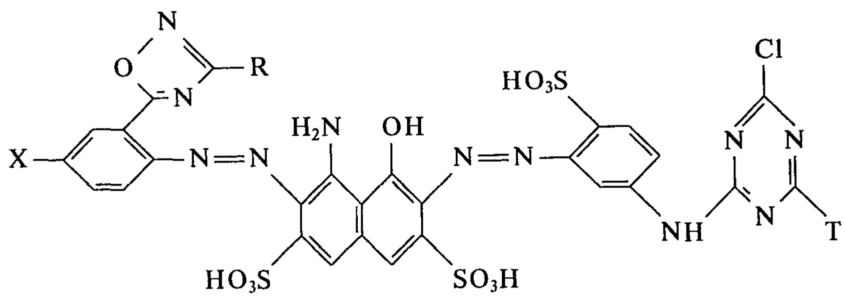

in der X = $SO_3H$, R = Phenyl und T = Cl bzw. NH = $C_6H_4-SO_3H$ (m-) ist.

Weitere Farbstoffe, die der oben genannten Formel entsprechen und die auf einem der oben angegebenen Wege erhalten werden können, sind in Tabelle 3 zusammengefaßt.

Tabelle 3

| Beispiel | X | R | T | Farbton |
|---|---|---|---|---|
| 55 | $SO_3H$ | $C_6H_5$ | $NH_2$ | grünstichigblau |
| 56 | $SO_3H$ | $C_6H_5$ | 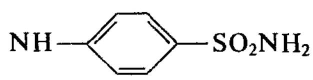 | grünstichigblau |
| 57 | $SO_3H$ | $C_6H_5$ | 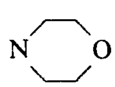 | grünstichigblau |
| 58 | $SO_3H$ | $C_6H_5$ | 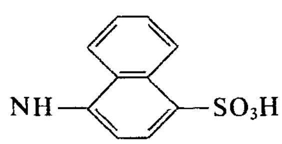 | grünstichigblau |
| 59 | $SO_3H$ | $C_6H_5$ | 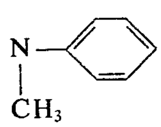 | grünstichigblau |

Fortsetzung

| Beispiel | X | R | T | Farbton |
|---|---|---|---|---|
| 60 | $SO_3H$ | $C_6H_5$ | 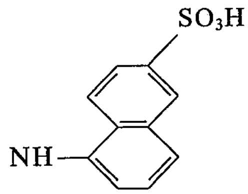 | grünstichigblau |
| 61 | $SO_3H$ | $C_6H_5$ | 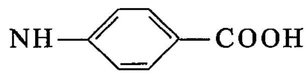 | grünstichigblau |
| 62 | $SO_3H$ | $C_6H_5$ | 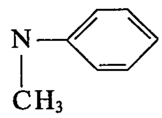 | grünstichigblau |
| 63 | $SO_3H$ | $C_6H_5$ | 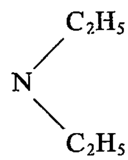 | grünstichigblau |
| 64 | H | $CH_2CH_2—SO_3H$ | Cl | grünstichigblau |
| 65 | H | $CH_2CH_2—SO_3H$ | $NH_2$ | grünstichigblau |
| 66 | $SO_3H$ | 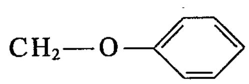 | Cl | grünstichigblau |
| 67 | $SO_3H$ | desgl. | 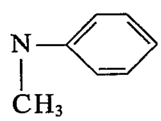 | grünstichigblau |
| 68 | $SO_3H$ | desgl. | $NH_2$ | grünstichigblau |
| 69 | $SO_3H$ | desgl. | 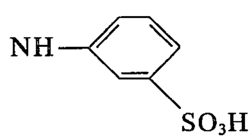 | grünstichigblau |
| 70 | $SO_3H$ | $CH_3$ | $NH_2$ | grünstichigblau |
| 71 | $SO_3H$ | $CH_3$ | $NH—C_2H_5$ | grünstichigblau |
| 72 | $SO_3H$ | $CH_3$ | 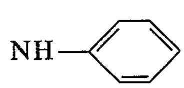 | grünstichigblau |
| 73 | $SO_3H$ | $CH_3$ | Cl | grünstichigblau |
| 74 | $SO_3H$ | $CH_3$ | 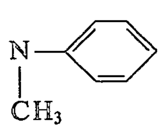 | grünstichigblau |
| 75 | $SO_3H$ | $CH_3$ | 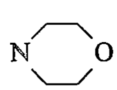 | grünstichigblau |

Fortsetzung

| Beispiel | X | R | T | Farbton |
|---|---|---|---|---|
| 76 | $SO_3H$ | $CH_3$ | 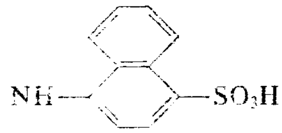 | grünstichigblau |
| 77 | $SO_3H$ | $CH_3$ | 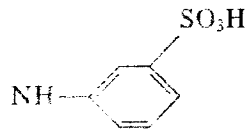 | grünstichigblau |
| 78 | $SO_3H$ | $CH_3$ | 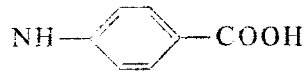 | grünstichigblau |
| 79 | H | $CH_2—SO_3H$ | Cl | grünstichigblau |
| 80 | H | $CH_2—SO_3H$ | $NH_2$ | grünstichigblau |
| 81 | $SO_3H$ | $CH_2—OCH_3$ | $NH_2$ | grünstichigblau |
| 82 | $SO_3H$ | $CH_2—OCH_3$ | Cl | grünstichigblau |
| 83 | $SO_3H$ | $CH_2CH_2—SO_3H$ | $NH_2$ | grünstichigblau |
| 84 | $SO_3H$ | $CH_2CH_2—SO_3H$ | Cl | grünstichigblau |
| 85 | $SO_3H$ | $CH_2CH_2—SO_3H$ | 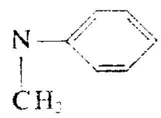 | grünstichigblau |
| 86 | $SO_3H$ | $CH_2CH_2—SO_3H$ | 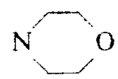 | grünstichigblau |
| 87 | $SO_3H$ | $CH_2CH_2—SO_3H$ | 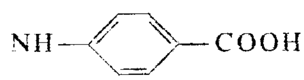 | grünstichigblau |
| 88 | $SO_3H$ | 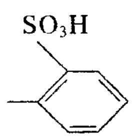 | Cl | grünstichigblau |
| 89 | $SO_3H$ | desgl. | $NH_2$ | grünstichigblau |
| 90 | $SO_3H$ | desgl. | 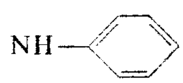 | grünstichigblau |
| 91 | $SO_3H$ | 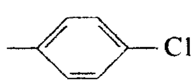 | $NH_2$ | grünstichigblau |
| 92 | $SO_3H$ | desgl. | Cl | grünstichigblau |
| 93 | H | 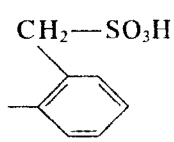 | $NH_2$ | grünstichigblau |
| 94 | H | desgl. | Cl | grünstichigblau |

Fortsetzung

| Beispiel | X | R | T | Farbton |
|---|---|---|---|---|
| 95 | $SO_3H$ | $CH_2—COOH$ | $NH_2$ | grünstichigblau |
| 96 | $SO_3H$ | $CH_2—COOH$ | Cl | grünstichigblau |
| 97 | $SO_3H$ | 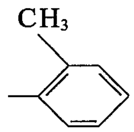 | $NH_2$ | grünstichigblau |
| 98 | $SO_3H$ | desgl. | Cl | grünstichigblau |

## Beispiel 99

Eine Suspension von 31,2 Teilen 1-Amino-8-hydroxynaphthalin-3,6-disulfonsäure in 400 Teilen Wasser wird mit 31,8 Teilen salzsauer diazotierter 2-(3'-Phenyl-1',2',4'-oxdiazolyl5')-anilin-4-sulfonsäure, die mit 14 Teilen Natriumformiat und 7,6 Teilen Natriumbikarbonat auf pH = 3 gestellt wurde, versetzt und ausgekuppelt. 21,8 Teile salzsauer diazotierte 2-Amino-5-nitrobenzolsulfonsäure werden eingetragen und bei pH = 5 bis 6 mit 129 Teilen Natriumbikarbonat aufgekuppelt. Der Disazofarbstoff wird mit 12 Teilen Schwefelnatrium bei 40 bis 60°C reduziert, anschließend mit 20 Teilen Wasserstoffsuperoxid (50%) versetzt und 1 Stunde nachgerührt. Die neutralisierte Lösung wird mit Eis auf 5 bis 10°C gekühlt und 19,1 Teile Cyanurchlorid eingetragen. Der Acylierungs-pH-Wert wird mit 13,6 Teilen Natriumhydrogencarbonat bei 6 bis 7 gehalten. Anschließend wird mit Ammoniak bei 50 bis 60°C umgesetzt und neutralisiert. Der abgesaugte und getrocknete Farbstoff färbt Baumwolle in grünen Tönen.

## Beispiel 100

Einen ähnlichen Farbstoff erhält man, wenn man den reduzierten Disazofarbstoff aus Beispiel 99 anstelle von Cyanurchlorid mit 32,8 Teilen des primären Kondensationsprodukts aus 18,9 Teilen Cyanurchlorid und 17,6 Teilen Metanilsäure bei 40—60° C umsetzt.

Die in Beispiel 99 und 100 beschriebenen Farbstoffe entsprechen der allgemeinen Formel

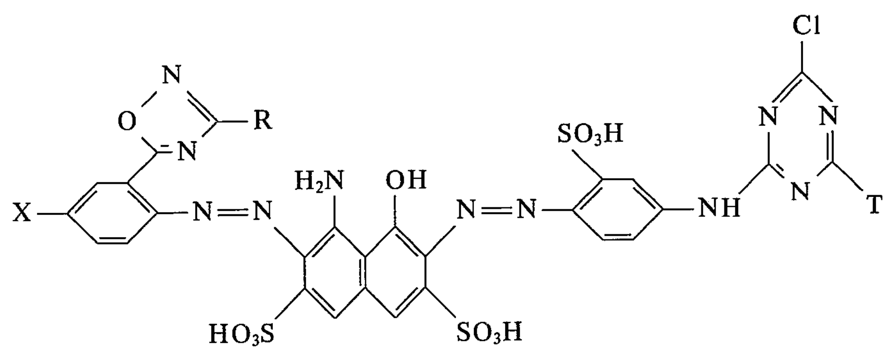

in der X = $SO_3H$, R = Phenyl und T = $NH_2$ bzw. $NH—C_6H_4—SO_3H$ (m-) ist.

Weitere Farbstoffe, die nach oben beschriebenem Weg erhalten werden können und die der oben genannten allgemeinen Formel entsprechen, sind in Tabelle 4 zusammengefaßt.

Tabelle 4

| Beispiel | X | R | T | Farbton |
|---|---|---|---|---|
| 101 | $SO_3H$ | $C_6H_5$ | Cl | grün |
| 102 | $SO_3H$ | $C_6H_5$ | NH 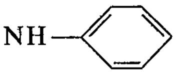 | grün |
| 103 | $SO_3H$ | $C_6H_5$ | N 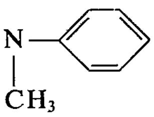 $CH_3$ | grün |
| 104 | H | $SO_3H$ 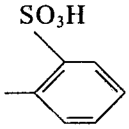 | $NH_2$ | grün |
| 105 | H | desgl. | Cl | grün |
| 106 | H | $CH_2—SO_3H$ 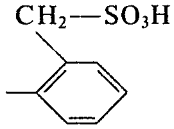 | $NH_2$ | grün |
| 107 | $SO_3H$ | $SO_3H$ 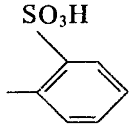 | $NH_2$ | grün |
| 108 | $SO_3H$ | desgl. | N 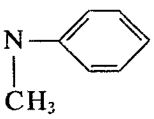 $CH_3$ | grün |
| 109 | $SO_3H$ | $CH_3$ | Cl | grün |
| 110 | $SO_3H$ | $CH_3$ | $NH_2$ | grün |
| 111 | $SO_3H$ | $CH_2—O$ 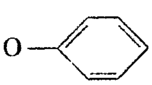 | Cl | grün |
| 112 | $SO_3H$ | desgl. | $NH_2$ | grün |

Beispiel 113

Zu einer Suspension von 15,3 Teilen 1-Amino-8-hydroxynaphthalin-3,6-disulfonsäure in 200 Teilen Wasser werden 18,1 Teile salzsauer diazotiertes 2-[3′-(2″-Sulfophenyl)-1′,2′,4′-oxdiazolyl-5′]-4-nitroanilin gegeben und ausgekuppelt. Der rote Monoazofarbstoff wird mit 10,9 Teilen salzsauer diazotierter 2-Amino-5-nitrobenzolsulfonsäure versetzt und mit 10,2 Teilen Natriumbikarbonat bei pH=4 bis 5 ausgekuppelt. Man reduziert mit 12,4 Teilen Schwefelnatrium bei 40 bis 60°C, versetzt anschließend mit 10 Teilen Wasserstoffsuperoxid und rührt 1 Stunde nach. Die neutralisierte Lösung wird mit Eis auf 5 bis 10°C gekühlt und 19,6 Teile Cyanurchlorid werden eingetragen. Der pH-Wert der Acylierung wird mit 9,4 Teilen Natriumbikarbonat bei 6 gehalten. Anschließend setzt man mit 24 Teilen konz. Ammoniak bei 40 bis 50°C um, neutralisiert, salzt aus und trocknet. Der Farbstoff färbt Baumwolle in dunkelgrünen Tönen.

Beispiel 114

Einen ähnlichen Farbstoff erhält man, wenn man anstelle der 2-Amino-5-nitrobenzolsulfonsäure aus Beispiel 113 18,3 Teile diazotiertes 2-[3′-(2″-Sulfophenyl)-1′,2′,4′-oxidazolyl-5′]-4-nitroanilin verwendet.

Die in Beispiel 113 und 114 genannten Farbstoffe entsprechen der allgemeinen Formel

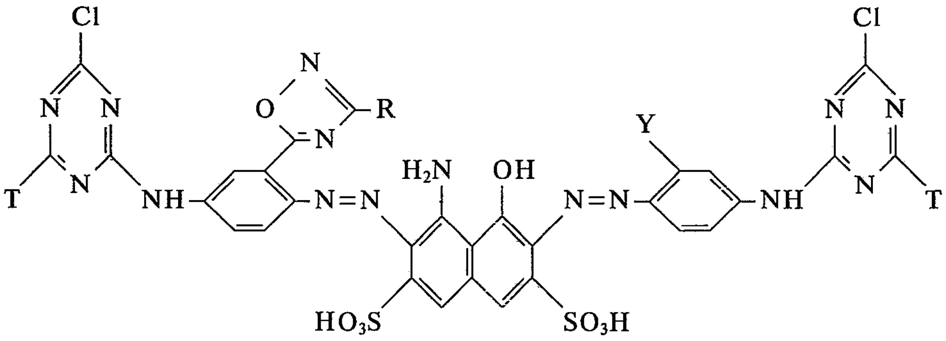

wobei R = $C_6H_4$—$SO_3H$ (o-), Y = $SO_3H$ bzw.

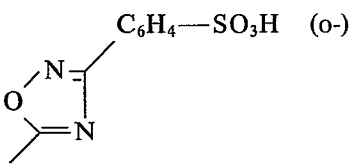

und T = $NH_2$ ist.

Weitere Farbstoffe, die nach oben beschriebenem Weg erhalten werden können und die oben genannter Formel entsprechen, sind in Tabelle 5 zusammengefaßt.

Tabelle 5

| Beispiel | T | Y | R | Farbton |
|---|---|---|---|---|
| 115 | Cl | $SO_3H$ | 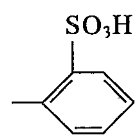 | grün |
| 116 | 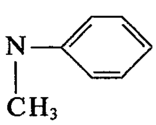 | $SO_3H$ | desgl. | grün |
| 117 | 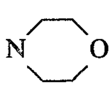 | $SO_3H$ | desgl. | grün |
| 118 | 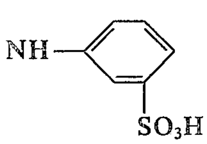 | $SO_3H$ | desgl. | grün |
| 119 | 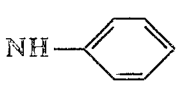 | $SO_3H$ | desgl. | grün |
| 120 | Cl | 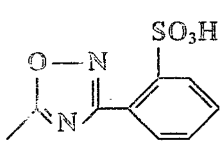 | desgl. | grün |

Fortsetzung

| Beispiel | T | Y | R | Farbton |
|---|---|---|---|---|
| 121 | 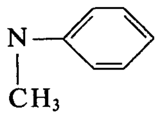 | 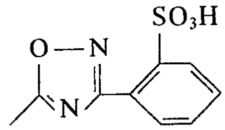 | 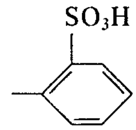 | grün |
| 122 | 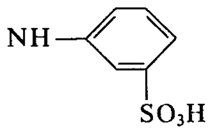 | desgl. | desgl. | grün |
| 123 | 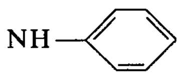 | desgl. | desgl. | grün |
| 124 | 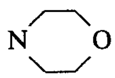 | desgl. | desgl. | grün |
| 125 | $NH_2$ | $SO_3H$ | $CH_2CH_2SO_3H$ | grün |
| 126 | Cl | $SO_3H$ | $CH_2CH_2SO_3H$ | grün |
| 127 | $NH_2$ | 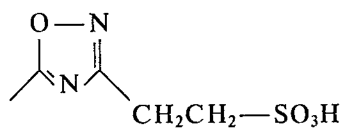 | $CH_2CH_2SO_3H$ | grün |
| 128 | Cl | desgl. | $CH_2CH_2SO_3H$ | grün |
| 129 | $NH_2$ | $SO_3H$ | $CH_3$ | grün |
| 130 | 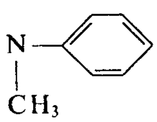 | $SO_3H$ | $CH_3$ | grün |
| 131 | Cl | 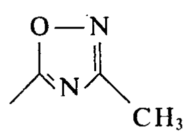 | $CH_3$ | grün |
| 132 | 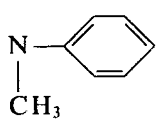 | desgl. | $CH_3$ | grün |
| 133 | Cl | desgl. | 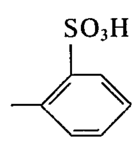 | grün |
| 134 | 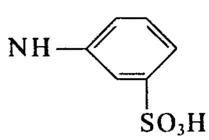 | desgl. | $CH_3$ | grün |
| 135 | $NH_2$ | $CH_2CH_2SO_3H$ | 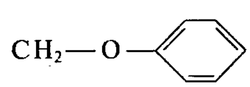 | grün |

Fortsetzung

| Beispiel | T | Y | R | Farbton |
|---|---|---|---|---|
| 136 | Cl | 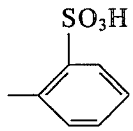 | 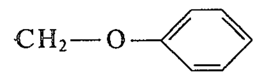 | grün |
| 137 | NH | 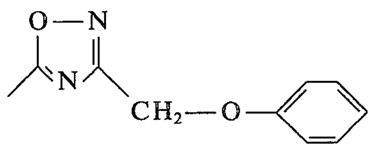 | 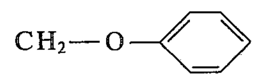 | grün |
| 138 | $NH_2$ | desgl. | 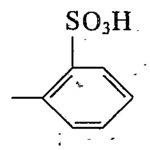 | grün |
| 139 | Cl | desgl. | desgl. | grün |

### Beispiel 140

10,9 Teile salzsauer diazotiertes 2-Sulfo-4-nitroanilin werden zu einer Suspension von 15,3 Teilen 1-Amino-8-hydroxynaphthalin-3,6-disulfonsäure in 200 Teilen Wasser gegeben und aufgekuppelt. Der Monoazofarbstoff wird mit 18,1 Teilen salzsauer diazotiertem 2-[3′-(2″-Sulfophenyl)-1′,2′,4′-oxdiazolyl-5′]-4-nitroanilin versetzt und mit 10,8 Teilen Natriumhydrogencarbonat bei pH=4—5 ausgekuppelt. Der erhaltene Disazofarbstoff wird bei 40 — 60°C mit 12,4 Teilen Schwefelnatrium reduziert, anschließend mit 10 Teilen Wasserstoffsuperoxyd versetzt und 1 Stunde nachgerührt. Die neutrale Lösung wird mit Eis auf 5—10°C gekühlt, mit 19,6 Teilen Cyanurchlorid versetzt und der Acylierungs-pH-Wert mit 9,4 Teilen Natriumhydrogencarbonat bei 6 gehalten. Das Reaktionsgemisch wird mit 4,2 Teilen Dinatriumhydrogenphosphat-2-hydrat und 3,8 Teilen Natriumdihydrogencarbonat-2-hydrat versetzt, mit Kochsalz abgeschieden und der Farbstoff durch Zerstäubungstrocknung des Preßkuchens isoliert. Man erhält ein schwarzes Pulver, das Baumwolle in grünen Tönen färbt.

### Beispiel 141

Einen ähnlichen Farbstoff erhält man, wenn der in Beispiel 140 beschriebene Farbstoff mit 10,9 Teilen N-Methylanilin bei 40—50° C und pH=5—6 umgesetzt wird.

Die in Beispiel 140 und 141 beschriebenen Farbstoffe entsprechen der allgemeinen Formel

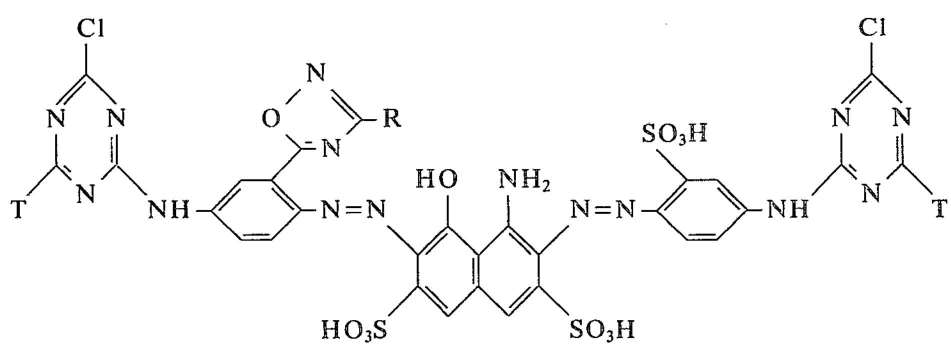

wobei R = $C_6H_4-SO_3H$ (o-) und T = Cl bzw.

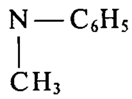

ist.

Weitere Farbstoffe, die auf oben beschriebenem Weg erhalten werden können und die oben genannter Formel entsprechen, sind in Tabelle 6 zusammengefaßt.

Tabelle 6

| Beispiel | R | T | Farbton |
|---|---|---|---|
| 142 | 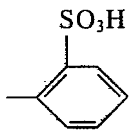 | $NH_2$ | grün |
| 143 | 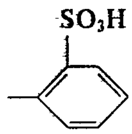 | 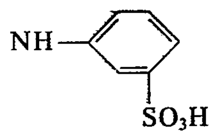 | grün |
| 144 | $CH_3$ | Cl | grün |
| 145 | $CH_3$ | $NH_2$ | grün |
| 146 | $CH_3$ | 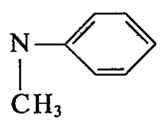 | grün |
| 147 | $CH_3CH_2-SO_3H$ | $NH_2$ | grün |
| 148 | $CH_2CH_2-SO_3H$ | Cl | grün |
| 149 | 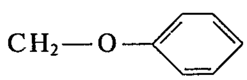 | $NH_2$ | grün |
| 150 | 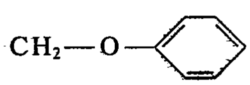 | Cl | grün |

## Beispiel 151

In eine neutrale Lösung von 16 Teilen 1-Amino-8-hydroxynaphthalin-4,6-disulfonsäure in 250 Teilen Wasser werden 3,5 Teilen Natriumformiat eingetragen. Mit Eis wird auf 0 bis 5° C abgekühlt und eine Suspension von 9,5 Teilen Cyanurchlorid in 200 Teilen Eis-Wassermischung zugegeben. Nach 1¹/₂ Stunden ist die Acylierung beendet. 15,9 Teile salzsauer diazotiertes 2-[3′-(2″-Sulfophenyl)-1′,2′,4′-oxdiazolyl-5′]-anilin werden zugesetzt und bei pH = 4 bis 5 mit 12,2 Teilen Natriumbikarbonat gekuppelt. Man versetzt mit 2,2 Teilen Dinatriumhydrogenphosphat-2-hydrat und 2 Teilen Natriumdihydrogenphosphat-2-hydrat, salzt aus und trocknet das Preßgut mittels Zerstäubungstrocknung. Man erhält ein dunkelrotes Pulver, das Baumwolle in brillanten gelbstichig roten Tönen färbt.

Einen ähnlichen Farbstoff erhält man, wenn man den Dichlortriazinfarbstoff mit 5,4 Teilen N-Methylanilin bei 40° C und pH = 5 umsetzt.

Beispiel 152

15,9 Teile salzsauer diazotierte 2-(3′-Phenyl-1′,3′,4′-oxdiazolyl-5′)anilin-4-sulfonsäure werden mit 6,8 Teilen Natriumformiat und 3,8 Teilen Natriumbikarbonat auf pH=3 gestellt und eine mit 6,8 Teilen Natriumformiat gepufferte Suspension von 15,6 Teilen 1-Amino-8-hydroxynaphthalin-3,6-disulfosäure in 200 Teilen Wasser eingetragen. Man kuppelt bei pH=3 aus und versetzt mit einer salzsauer diazotierten Suspension von 18,5 Teilen des primären Kondensationsproduktes aus 10,5 Teilen Cyanurchlorid und 10,4 Teilen 1,3-Phenylendiamin-4-sulfonsäure. Der Kupplungs-pH-Wert wird mit 90 Teilen 2 n Natriumcarbonatlösung auf 7 bis 8 gestellt und ausgekuppelt. Der Farbstoff wird mit Kochsalz abgeschieden und sprühgetrocknet. Man erhält ein schwarzes Pulver, das Baumwolle in blauen Tönen färbt.

Analog zu Beispiel 152 erhält man auch die in der folgenden Tabelle gekennzeichneten Farbstoffe:

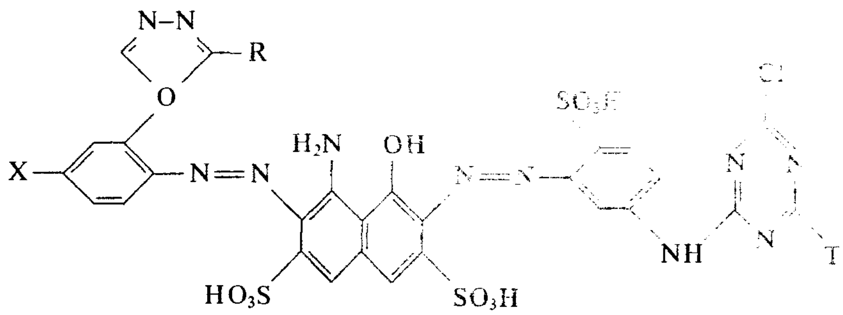

| Beispiel | X | R | T | Farbton |
|---|---|---|---|---|
| 153 | $SO_3H$ | 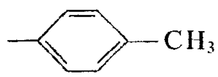 | Cl | blau |
| 154 | $SO_3H$ | desgl. | $NH_2$ | blau |
| 155 | $SO_3H$ | desgl. | 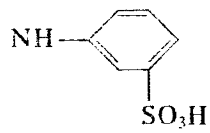 | blau |
| 156 | $SO_3H$ | $C_6H_5$ | $NH_2$ | blau |
| 157 | $SO_3H$ | $C_6H_5$ | $NHC_6H_5$ | blau |
| 158 | $SO_3H$ | $CH_3$ | $NH_2$ | blau |
| 159 | $SO_3H$ | $CH_3$ | 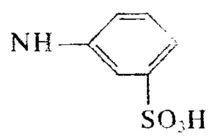 | blau |
| 160 | $SO_3H$ | $C_2H_5$ | Cl | blau |
| 161 | $SO_3H$ | $C_2H_5$ | $NH_2$ | blau |
| 162 | $SO_3H$ | $C_2H_4OH_3$ | Cl | blau |
| 163 | $SO_3H$ | $C_2H_4OH_3$ | $NH_2$ | blau |
| 164 | H | $CH_3$ | 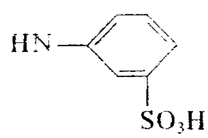 | blau |
| 165 | H | $CH_3$ | desgl. | blau |
| 166 | Cl | $CH_3$ | desgl. | blau |

**Patentansprüche**

1. Reaktivfarbstoffe der allgemeinen Formel I

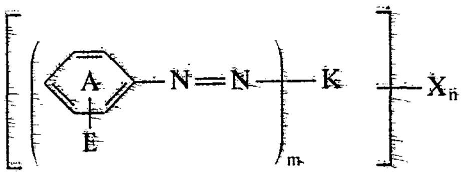

I

in der:

E einen Rest der Formel

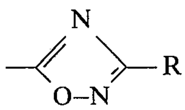

oder

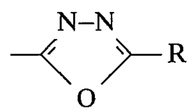

K der Rest einer Kupplungskomponente,
R Wasserstoff oder ein Substituent,
X ein reaktive Gruppe,
m die Zahlen 1 oder 2 und
n die Zahlen 1, 2, 3 oder 4 bedeuten und wobei der Ring A noch weiter substituiert sein kann.

2. Farbstoffe gemäß Anspruch 1 der Formel Ia

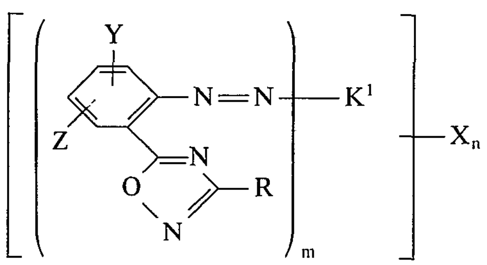

(I a)

in der

Y Wasserstoff, Chlor, Brom, Nitro, Hydroxysulfonyl oder ein Triazinylaminorest,
Z Wasserstoff oder Chlor und
$K^1$ der Rest einer sulfonsäuregruppenhaltigen Kupplungskomponente der Pyrazolon-, Naphtholsulfonsäure-, Aminonaphthalinsulfonsäure-, Aminonaphtholsulfonsäure- oder durch Arylazo substituierten Aminonaphtholsulfonsäurereihe ist und
R, X, m und n die angegebene Bedeutung haben.

3. Verwendung der Farbstoffe gemäß Anspruch 1 zum Färben hydroxyl- und aminogruppenhaltiger Substrate, insbesondere von Cellulosefasern.

**Claims**

1. A reactive dye of the general formula I

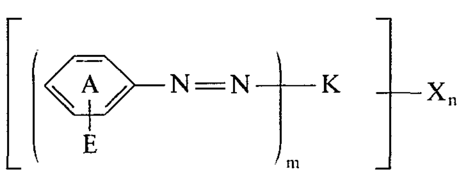

I

where

E is a radical of the formula

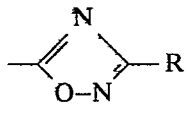 or 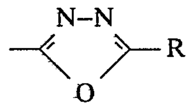

K is the radical of a coupling component,
R is hydrogen or a substituent,
X is a reactive group,
m is 1 or 2 and
n is 1, 2, 3 or 4, and the ring A may be additionally substituted.

2. A dye as claimed in claim 1, of the formula Ia

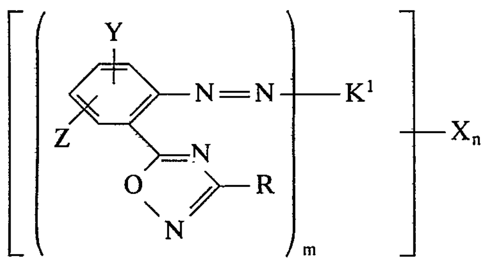

(I a)

where

Y is hydrogen, chlorine, bromine, nitro, hydroxysulfonyl or triazinylamino,
Z is hydrogen or chlorine, and
$K^1$ is the radical of a coupling component, containing sulfonic acid groups, of the pyrazolone, naphtholsulfonic acid, aminonaphthalenesulfonic acid, aminonaphtholsulfonic acid or arylazo-substituted aminonaphtholsulfonic acid series, and
R, X, m and n have the stated meanings.

3. Use of a dye as claimed in claim 1 for dyeing hydroxyl-containing and amino-containing substrates, especially cellulosic fibers.

**Revendications**

1. Colorants réactifs de formule générale I

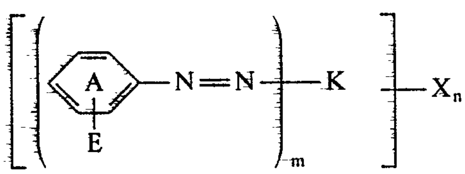

(I)

dans laquelle

E est un radical de formule

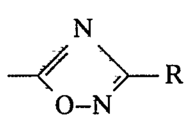 ou 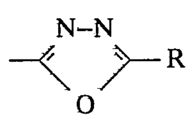

K est le radical d'un composant de copulation,
R est un hydrogène ou un substituant.
X est un groupe réactif,
m est le nombre 1 ou 2 et
n est le nombre 1, 2, 3 ou 4, le noyau A pouvant être substitué davantage encore.

2. Colorants selon la revendication 1 de formule Ia

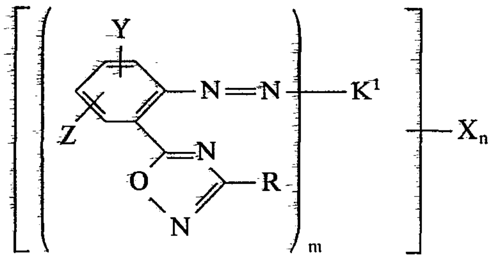

(Ia)

dans laquelle

Y est un hydrogène, un chlore, un brome, un nitro, un hydroxysulfonyle ou un radical triazinylamino,
Z est un hydrogène ou un chlore et
$K^1$ est le radical d'un composant de copulation contenant des groupes acide sulfonique, de la série de la pyrazolone, de l'acide naphtholsulfonique, de l'acide aminonaphthalène-sulfonique, de l'acide aminonaphtholsulfonique ou de l'acide aminonaphtholsulfonique substitué par un groupe arylazoïque, et
R, X, m et n ont les significations déjà données.

3. Utilisation des colorants selon la revendication 1 pour la teinture de substrats contenant des groupes hydroxyle et amino, et notamment de fibres de cellulose.